# EUROPEAN PATENT APPLICATION

(11) **EP 3 961 377 A1**
(43) Date of publication of application: **02.03.2022**
(21) Application number: 20796324.0
(22) Date of filing: 14.02.2020
(51) Int. Cl.: G06F 8/61, G06F 21/10

(54) **ELECTRONIC DEVICE, METHOD FOR CONTROL THEREFOR, AND INFORMATION PROCESSING SYSTEM**

(30) Priority: 26.04.2019 JP 2019085412
(71) Applicant: KYOCERA Document Solutions Inc., Osaka-shi, Osaka 540-8585 (JP)
(72) Inventor: YOSHIMOTO, Hiroshi, Osaka-shi, Osaka 540-8585 (JP); NAKAMURA, Hiroshi, Osaka-shi, Osaka 540-8585 (JP); IMAI, Satoshi, Osaka-shi, Osaka 540-8585 (JP); KAMAKURA, Aya, Osaka-shi, Osaka 540-8585 (JP)
(74) Representative: Herrero & Asociados, S.L.
(86) International application number: PCT/JP2020/005823
(87) International publication number: WO 2020/217654

(57) **Abstract**

When the application (P) is activated (enabled, validated) by the second activation key (K2) issued by the first electronic apparatus (10), the control circuit (21) of the second electronic apparatus (20) stores the application identifier (PI), i.e., information for specifying the application (P) in the backup area (the second storage area (282)). Even if the application (P) is accidentally deleted from the second electronic apparatus (20), the application (P) can be recovered by identifying the application based on the information in the backup area.

## Description

### Technical Field

The present invention relates to an electronic apparatus. The present invention further relates to a control method executed by the electronic apparatus. The present invention further relates to an information processing system including the electronic apparatus.

### Background Art

In the technical field of electronic apparatus, it is known to operate application software (application program; hereinafter, referred to as "application") on basic software (including an operating system and middleware; hereinafter, referred to as "platform") for operating electronic apparatus (e.g., image forming apparatus and multi-function multifunction peripheral). It is also known in the art that an electronic apparatus makes an application usable (enables an application) by receiving an electronic license key (hereinafter, referred to as an "activation key") from a provider of the application.

The related art disclosed in Patent Literature 1 transfers licenses from an older electronic apparatus to a new electronic apparatus when replacing the electronic apparatuses. In the related art, the license transfer and the setup of the new electronic apparatus need to be performed at the installation site of the electronic apparatus, so that the time required for these implementations is downtime. Here, the downtime is a time during which the user of the electronic apparatus cannot use the electronic apparatus. The setup includes acquisition of an activation key and apply of the activation key to an electronic apparatus.

### Citation List

### Patent Literature

Patent Literature 1: Japanese patent application Laid-open No. 2009-271680

### Disclosure of Invention

### Technical Problem

Since requesting for the activation key is laborious and may take a long time to issue, if the application is made usable without the activation key only in the case of replacing the electronic apparatus, there is a problem that it is difficult to recover the application when the application is deleted from the storage device of the electronic apparatus due to mistake or the like.

It is an object of the present invention to provide a recovery method after deleting an application from a storage device when the application is enabled without an activation key.

### Solution to Problem

To attain the aforementioned object, according to an embodiment of the present invention, there is provided an electronic apparatus, including:
a first storage area that stores an application to be enabled by a second activation key issued by a different electronic apparatus, the application enabled by a first activation key being installed in the different electronic apparatus;
a second storage area; and
a control unit that,
   when the application stored in the first storage area is enabled by the second activation key, stores, in the second storage area, an application identifier indicating information specifying the application, and
   after the application is deleted from the first storage area, stores, in the first storage area, the application specified by the application identifier.

(1) According to the present embodiment, when an application is activated (enabled, validated) by an activation key (second activation key) issued by another electronic apparatus instead of the license server, information for specifying the application is stored in a backup area (second storage area). Even if an application is accidentally deleted from the electronic apparatus, it can be recovered by identifying the application based on the information in the backup area and downloading the specified application from the cloud or the like. According to the present embodiment, when the application is enabled without an activation key, it is possible to provide a recovery method after deleting the application from the storage device.

To attain the aforementioned object, according to other embodiments of the present invention, there are provided a control method for an electronic apparatus and an information processing system.

A control method for an electronic apparatus, including:
storing, in a first storage area, an application to be enabled by a second activation key issued by a different electronic apparatus, the application enabled by a first activation key being installed in the different electronic apparatus;
when the application stored in the first storage area is enabled by the second activation key, storing, in a second storage area, an application identifier indicating information specifying the application;
when re-installation of the application is requested after the application is deleted from the first storage area, determining whether or not the application identifier is stored in the second storage area; and
when the application identifier is stored in the second storage area, storing, in the first storage area, the application specified by the application identifier again.

An information processing system, including:
a license server that issues a first activation key that enables an application;
a first electronic apparatus in which an application enabled by the first activation key is installed; and
a second electronic apparatus including a first storage area that stores the application, in which
the second electronic apparatus further includes
   a second storage area that stores, when the application stored in the first storage area is enabled by a second activation key issued by the first electronic apparatus, an application identifier indicating information specifying the application, and
   a control unit that
      when re-installation of the application is requested after the application is deleted from the first storage area, determines whether or not the application identifier is stored in the second storage area, and
      when the application identifier is stored in the second storage area, stores, in the first storage area, the application specified by the application identifier again.

### Advantageous Effects of Invention

According to the present invention, it is possible to provide a recovery method after deleting an application from a storage device when the application is enabled without an activation key.

Note that the effect described here is not necessarily limitative, and any of the effects described in the present invention may be provided.

### Brief Description of Drawings

[Fig. 1]An apparatus setup system according to an embodiment of the present invention.
[Fig. 2] A hardware configuration of a first electronic apparatus.
[Fig. 3] A hardware configuration of a second electronic apparatus.
[Fig. 4] A hardware configuration of a license server.
[Fig. 5] A functional configuration of the second electronic apparatus.
[Fig. 6] A diagram schematically showing an operation flow of an operation flow of the apparatus setup system.
[Fig. 7] An operation flow of the second electronic apparatus.

### Mode(s) for Carrying Out the Invention

Hereinafter, an embodiment of the present disclosure will be described with reference to the drawings.

### 1. Apparatus setup system

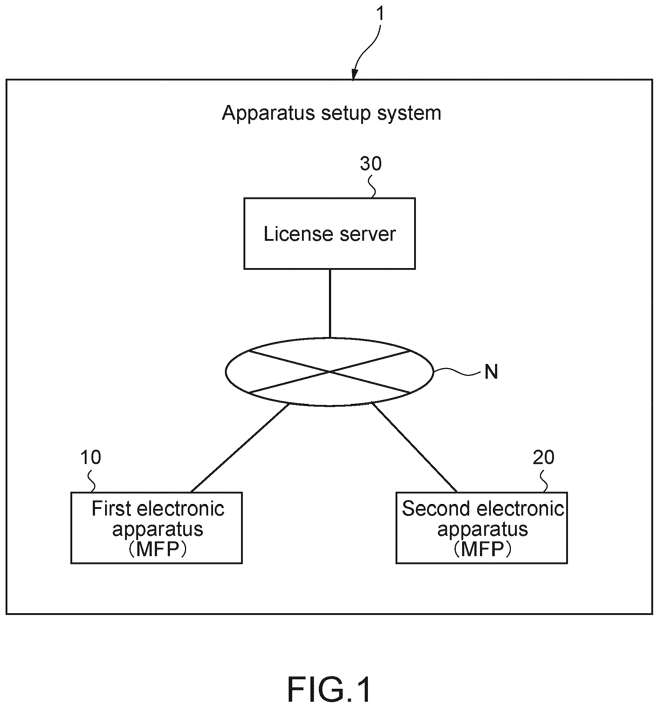

Fig. 1 shows an apparatus setup system according to an embodiment of the present invention.

The apparatus setup system 1 is an example of an information processing system. The apparatus setup system 1 includes a first electronic apparatus 10, a second electronic apparatus 20, and a license server 30. The first electronic apparatus 10 and the second electronic apparatus 20 are, for example, image-forming apparatuses such as Multifunction Peripherals or MFPs. The first electronic apparatus 10, the second electronic apparatus 20, and the license server 30 are connected via a network N so as to be able to communicate with each other.

The first electronic apparatus 10 is an old device to be replaced, and the second electronic apparatus 20 is a new device to be carried into the installation site of the first electronic apparatus 10.

In the first electronic apparatus 10, an application P is installed on a platform such as an operating system.

The provider of the application P grants the user the use of the application P on the condition that the number of installable electronic apparatus is limited to one. Here, the "user" is a user of the first electronic apparatus 10 and the second electronic apparatus 20. The application P is basically installed on the electronic apparatus and is enabled (activated) by activation by an activation key issued by the license server 30. With this mechanism, the application P can be used only in one electronic apparatus. However, in reality, various files configuring the application P can be copied.

Although various types of activation keys are conceivable, in the present embodiment, a character string is generated based on an electronic apparatus identifier (e.g., a serial number of the electronic apparatus) unique to one electronic apparatus that is licensed and an application identifier PI unique to the application P.

### 2. Hardware configuration of electronic apparatus

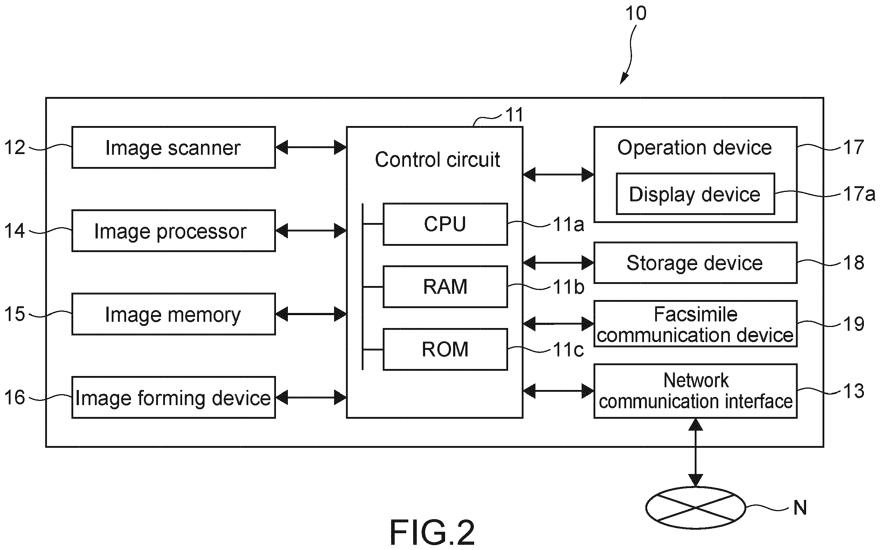

Fig. 2 shows a hardware configuration of a first electronic apparatus.

The first electronic apparatus 10 includes the control circuit 11. The control circuit 11 includes the CPU (Central Processing Unit) 11a, the RAM (Random Access Memory) 11b, the ROM (Read Only Memory) 11c, dedicated hardware circuits, and the like and performs overall operational control of the electronic apparatus 10. The CPU 11a loads information processing programs stored in the ROM 11c in the RAM 11b and executes the information processing programs. The ROM 11c is a nonvolatile memory that stores programs executed by the CPU 11a, data, and the like. The ROM 11c is an example of a non-transitory computer readable recording medium.

The control circuit 11 is connected to the image scanner 12, the image processor 14 (including GPU (Graphics Processing Unit)), the image memory 15, the image forming device 16 (printer), the operation device 17 including the display device 17a (touch panel), the large volume nonvolatile storage device 18 such as an HDD (Hard Disk Drive) or an SSD (Solid State Drive), the facsimile communication device 19, the network communication interface 13, and the like. The control circuit 11 performs operational control of the respective devices connected thereto and sends/receives signals and data to/from those devices. The operation device 17 (touch panel) is a type of an input device, and a sound input device including a microphone may be used as an input device.

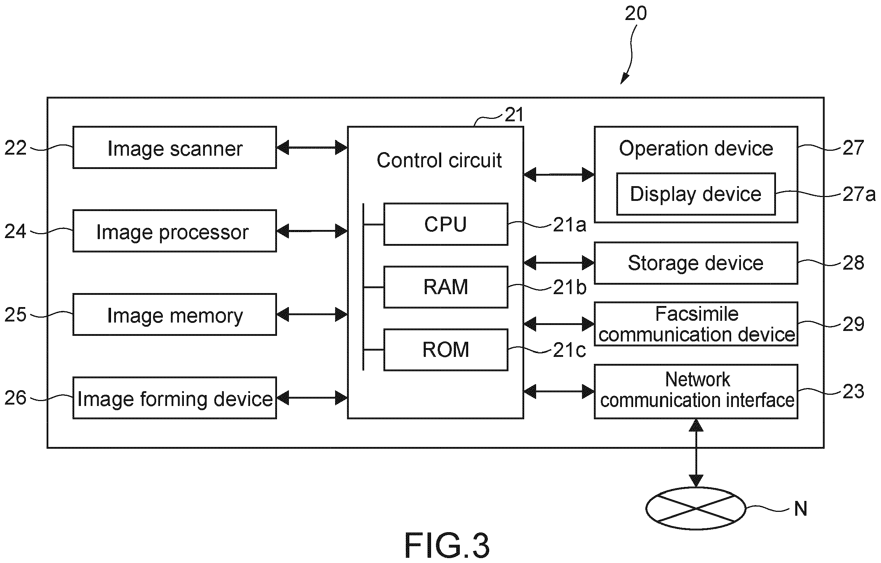

Fig. 3 shows a hardware configuration of a second electronic apparatus.

The hardware configuration of the second electronic apparatus 20 is similar to the hardware configuration of the first electronic apparatus 10. The second electronic apparatus 20 includes the control circuit 21. The control circuit 21 includes the CPU (Central Processing Unit) 21a, the RAM (Random Access Memory) 21b, the ROM (Read Only Memory) 21c, dedicated hardware circuits, and the like and performs overall operational control of the electronic apparatus 10. The CPU 21a loads information processing programs stored in the ROM 21c in the RAM 21b and executes the information processing programs. The ROM 21c is a nonvolatile memory that stores programs executed by the CPU 21a, data, and the like. The ROM 21c is an example of a non-transitory computer readable recording medium.

The control circuit 21 is connected to the image scanner 22, the image processor 24 (including GPU (Graphics Processing Unit)), the image memory 25, the image forming device 26 (printer), the operation device 27 including the display device 27a (touch panel), the large volume nonvolatile storage device 28 such as an HDD (Hard Disk Drive) or an SSD (Solid State Drive), the facsimile communication device 29, the network communication interface 23, and the like. The control circuit 21 performs operational control of the respective devices connected thereto and sends/receives signals and data to/from those devices. The operation device 27 (touch panel) is a type of an input device, and a sound input device including a microphone may be used as an input device.

### 3. Hardware configuration of license server

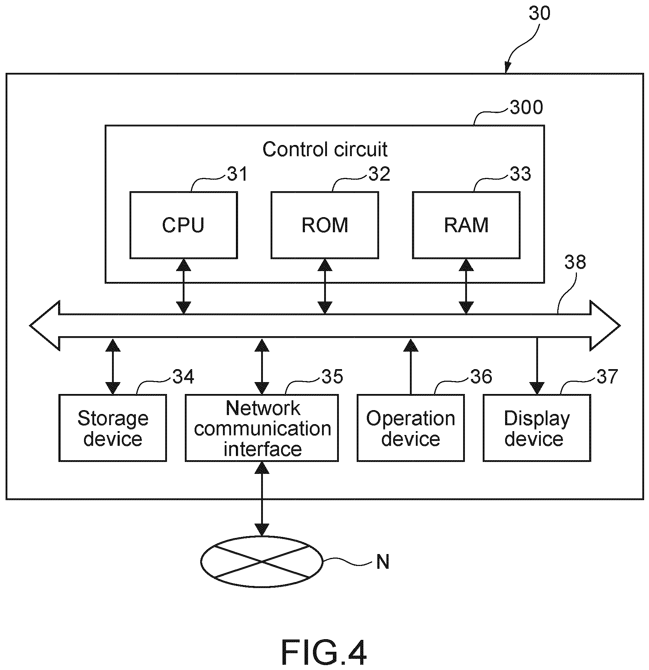

Fig. 4 shows a hardware configuration of a license server.

The license server 30 includes the CPU 31, the ROM 32, the RAM 33, the large volume nonvolatile storage device 34 such as an HDD or an SSD, the network communication interface 35, the operation device 36, and the display device 37, and the bus 38 connecting them to each other.

The CPU 31, the ROM 32, and the RAM 33 are included in the control circuit 300. The CPU 31 loads information processing programs stored in the ROM 32 in the RAM 33 and executes the information processing programs. The ROM 32 stores programs executed by the CPU 31, data, and the like nonvolatile. The ROM 32 is an example of a non-transitory computer readable recording medium.

The license server 30 transfers the activation keys K1, K2 ... to the respective electronic apparatuses.

### 4. Functional configuration of electronic apparatuses

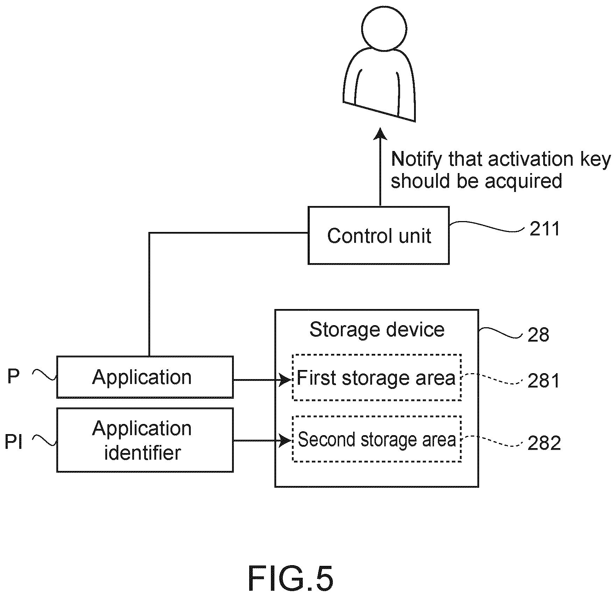

Fig. 5 shows a functional configuration of the second electronic apparatus.

In the control circuit 21 of the second electronic apparatus 20, the CPU 21a loads the information processing program stored in the ROM 21c into the RAM 21b and executes the loaded program, thereby operating as the control unit 211.

The control unit 211 configures a storage area of the storage device 28 such that the storage device 28 has at least a first storage area 281 and a second storage area 282. Here, the first storage area 281 is a "main storage area" for storing a group of files configuring an operating system and an application P.

The second storage area 282 is a "backup area" for storing an application identifier PI. The second storage area 282 may be configured in another storage device that is not the storage device 28, such as the ROM 21c. The illustrated configuration is an example. When configured in another storage device, it is advantageous to recover the application P in the event of a problem such as a failure of the storage device 28.

The control unit 211 enables the application P stored in the first storage area 281 by the second activation key K2. That is, the control unit 211 activates the application P. To activate the application P is called "activation".

At the time of the activation, the control unit 211 stores the application identifier PI in the second storage area 282. Here, the application identifier PI is an identifier indicating information for identifying the application P.

When the application P is deleted from the first storage area 281, the control unit 211 stores the application (that is, the "application P") specified by the application identifier PI stored in the second storage area 282 in the first storage area 281 again. At this time, the control unit 211 downloads and acquires the file of the application P from the license server 30.

In the above-described function, first, after the application P is deleted from the first storage area 281, the control unit 211 determines whether or not the application identifier PI is stored in the second storage area 282 when the re-installation of the application P is requested based on a user operation, a request from the license server 30, or the like.

Next, when the application identifier PI is stored in the second storage area 282, the control unit 211 stores the application specified by the application identifier PI in the first storage area 281 again.

Alternatively, when the application identifier PI is not stored in the second storage area 282, the control unit 211 notifies that an arbitrary activation key should be acquired from the license server 30.

Further, when the application P is stored in the first storage area 281 again, the control unit 211 enables the application P without using the activation key. In other words, activation is performed without requiring an activation key.

Further the control unit 211 inputs the third activation key K3, which is issued by the license server 30 that issued the first activation key K1, to itself. In this case, the application identifier PI is deleted from the second storage area 282. In addition, the application P is enabled at the same time as the application identifier PI delete.

### 5. Operation flow of apparatus setup system and electronic apparatuses

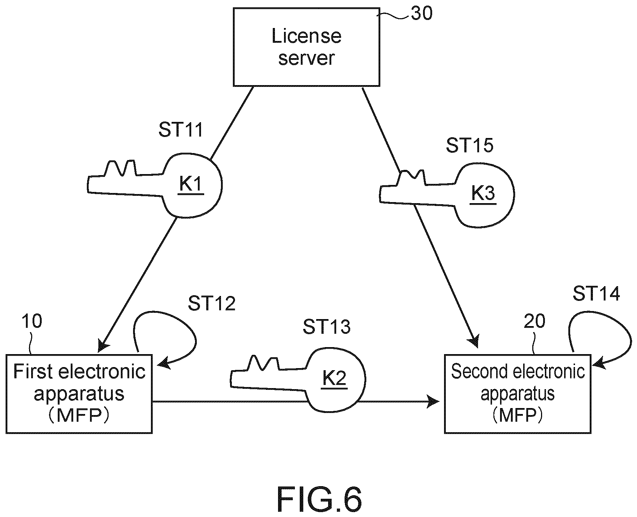

Fig. 6 shows an operation flow of an operation flow of the apparatus setup system.

The application P can be used only on one electronic apparatus per license. On the other hand, the application P can be copied for the convenience of replacing the electronic apparatus. Therefore, the apparatus setup system 1 solves the problem of introducing activation by an activation key and enabling only one electronic apparatus per license.

However, it is time-consuming for the user to apply to the issuer of the activation key. The issuer may not be able to quickly respond to the issuance of the activation key due to the sudden replacement, and it may take time before the activation key is issued. The means for solving this problem will be described with reference to the schematic diagram of Fig. 6.

In this embodiment, first, the license server 30 transmits the first activation key K1 to the first electronic apparatus 10 (step ST11). The first electronic apparatus 10 enables the application P installed in the first electronic apparatus 10 using the first activation key K1 received (step ST12).

After that, the first electronic apparatus 10 transmits the second activation key K2 generated in the first electronic apparatus 10 to the second electronic apparatus 20, for example, when the replacement timing arrives (step ST13). Before or after the step ST13, the application P is installed in the second electronic apparatus 20.

Next, the second electronic apparatus 20 activates the application P using the second activation key K2 (step ST14). The second activation key K2 is not an activation key issued by the license server 30, but is issued from the first electronic apparatus 10 in which the application P has been activated by the first activation key K1. This solves the problem that only one electronic apparatus can be used per license, and also the problem that the time required for replacement is shortened.

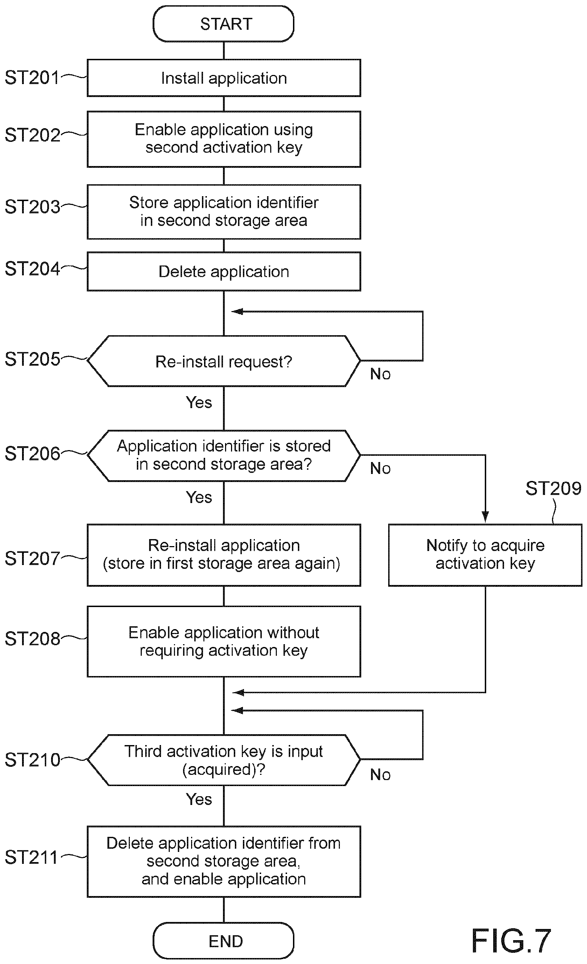

However, when the application P is deleted from the storage device 28 of the second electronic apparatus 20 due to a mistake or the like after the step ST14, recovery becomes difficult. In order to solve this problem, in the present embodiment, when the second activation key K2 is applied in the second electronic apparatus 20, a process (described later with reference to Fig. 7) is executed.

The application P may be included in the package file together with the second activation key K2 and transmitted from the first electronic apparatus 10 to the second electronic apparatus 20. The method of transporting the application P is not limited. For example, the transporting is performed by a series of processes including an export process in the first electronic apparatus 10 and an import process in the second electronic apparatus 20. Alternatively, it is stored in a portable recording medium (such as a USB memory) not shown and transported.

Fig. 7 shows the operation flow of the second electronic apparatus.

First, the steps until the application is deleted will be described. The control unit 211 of the control circuit 20 installs the application P in the second electronic apparatus 20 by storing a file constituting the application P or another setting file in the storage device 28 or the ROM 23 (step ST201). There is no limitation on the context of the time between this processing and the transmission/reception processing of the second activation key K2. It is assumed that the control unit 211 has acquired the second activation key K2.

Subsequently, the control unit 211 enables the application P installed using the second activation key K2 (step ST202). That is, activation is performed.

Subsequently, the control unit 211 stores the application identifier PI for specifying the application P in the second storage area 282 (backup area) (step ST203). The step ST203 may be performed concurrently with the step ST202.

After that, it is assumed that a situation occurs in which part or all of the application P is deleted from the first storage area 281 due to some circumstance, for example, an erroneous operation or the like (step ST204).

Thereafter, the control unit 211 determines whether or not there is a re-install request (step ST205). If there is no re-installation request (step ST205/No), the the control unit 211 waits until a re-installation request is input to the control unit 211. The re-installation request is input to the control unit 211 based on a user operation, a request from the license server 30, or the like.

When there is a re-installation request (step ST205/Yes), the control unit 211 determines whether or not the application identifier PI is stored in the second storage area 282 (step ST206). Since the application identifier PI may be deleted at the same time when the application is deleted, the control unit 211 executes the determination of the step ST206.

Next, when the application identifier PI is stored in the second storage area 282 (step ST206/Yes), the control unit 211 stores the application specified by the application identifier PI in the first storage area 281 again (step ST207). That is, according to the step ST207, the application P is stored again in the first storage area 281.

Alternatively, when the application identifier PI is not stored in the second storage area 282 (Step ST206/No), the control unit 211 notifies the license server 30 to acquire an arbitrary activation key (Step ST209). This notification is notified by display on the display unit 27a or the like.

Further, when the application P is stored in the first storage area 281 again (step ST207), the control unit 211 enables the application P without using the activation key (step ST208). In other words, activation is performed without requiring an activation key.

Thereafter, when the third activation key K3 is issued from the license server 30 and is received by the second electronic apparatus 20 (step ST15 in Fig. 6), the control unit 211 inputs the third activation key K3 issued by the license server 30 that issued the first activation key K1 to itself.

When the third activation key K3 is input to the control unit 211 (step ST210/Yes), the control unit 211 deletes the application identifier PI from the second storage area 282 (step ST211). In addition, the application P is enabled at the same time as the application-identifier PI is deleted (step ST211).

### 6. Conclusion

(1) According to the present embodiment, when the application P is activated (enabled, validated) by the activation key (the second activation key K2) issued by another electronic apparatus not the license server 30, information for specifying the application P is stored in the backup area (the second storage area 282). Even if the application P is accidentally deleted from the second electronic apparatus 20, the application can be recovered by identifying the application based on the information in the backup area and downloading the specified application P from the cloud or the like. According to the present embodiment, when the application P is enabled without an activation key, it is possible to provide a recovery method after deleting the application P from the storage device 28.
(2) According to the present embodiment, at the time of restoring the application, the application P can be activated (enabled, validated) without any activation key.
(3) According to the present embodiment, when the application P is activated (enabled, validated) by the activation key issued by the license server 30 (third activation key K3), the application identifier PI of the backup area is deleted. As a result, when the application is formally activated, information for coping with unintended application deletion after the application is temporarily activated is deleted, so that unauthorized use of the information becomes impossible.
(4) According to the present embodiment, when activating (enabling) the application P, if the application identifier PI is backed up in the backup area (the second storage area 282), activation can be performed, and if it is not backed up, notification can be made to prompt to acquire an arbitrary activation key from the license server 30.

It should be understood by those skilled in the art that various modifications, combinations, sub-combinations and alterations may occur depending on design requirements and other factors insofar as they are within the scope of the appended claims or the equivalents thereof.

## Claims

1. An electronic apparatus, comprising:
a first storage area that stores an application to be enabled by a second activation key issued by a different electronic apparatus, the application enabled by a first activation key being installed in the different electronic apparatus;
a second storage area; and
a control unit that,
when the application stored in the first storage area is enabled by the second activation key, stores, in the second storage area, an application identifier indicating information specifying the application, and
after the application is deleted from the first storage area, stores, in the first storage area, the application specified by the application identifier.

2. The electronic apparatus according to claim 1, wherein
when the control unit stores the application in the first storage area again, the control unit enables the application without using an activation key.

3. The electronic apparatus according to claim 1, wherein
when a third activation key issued by a license server that issues the first activation key, the control unit deletes the application identifier from the second storage area, and enables the application.

4. The electronic apparatus according to claim 3, wherein
the control unit,
when re-installation of the application is requested after the application is deleted from the first storage area, determines whether or not the application identifier is stored in the second storage area,
when the application identifier is stored in the second storage area, stores, in the first storage area, the application specified by the application identifier again, and
when the application identifier is not stored in the second storage area, notifies that an arbitrary activation key should be acquired from the license server.

5. A control method for an electronic apparatus, comprising:
storing, in a first storage area, an application to be enabled by a second activation key issued by a different electronic apparatus, the application enabled by a first activation key being installed in the different electronic apparatus;
when the application stored in the first storage area is enabled by the second activation key, storing, in a second storage area, an application identifier indicating information specifying the application;
when re-installation of the application is requested after the application is deleted from the first storage area, determining whether or not the application identifier is stored in the second storage area; and
when the application identifier is stored in the second storage area, storing, in the first storage area, the application specified by the application identifier again.

6. An information processing system, comprising:
a license server that issues a first activation key that enables an application;
a first electronic apparatus in which an application enabled by the first activation key is installed; and
a second electronic apparatus including a first storage area that stores the application, wherein
the second electronic apparatus further includes
a second storage area that stores, when the application stored in the first storage area is enabled by a second activation key issued by the first electronic apparatus, an application identifier indicating information specifying the application, and
a control unit that
when re-installation of the application is requested after the application is deleted from the first storage area, determines whether or not the application identifier is stored in the second storage area, and
when the application identifier is stored in the second storage area, stores, in the first storage area, the application specified by the application identifier again.
